# EUROPÄISCHE PATENTSCHRIFT

(11) **EP 2 079 939 B1**
(45) Veröffentlichungstag und Bekanntmachung des Hinweises auf die Patenterteilung: **09.06.2010**
(21) Anmeldenummer: 07820421.1
(22) Anmeldetag: 20.09.2007
(51) Int. Cl.: F16D 59/02

(54) **FESTSTELLBREMSE ZUM FESTSTELLEN MINDESTENS EINES DREHBAR GELAGERTEN BAUTEILS GEGENÜBER EINEM GEHÄUSE**
FIXING BRAKE FOR FIXING AT LEAST ONE ROTATABLY MOUNTED COMPONENT WITH RESPECT TO A HOUSING
FREIN DE BLOCAGE POUR BLOQUER PAR RAPPORT À UN BOÎTIER AU MOINS UN ÉLÉMENT MONTÉ À ROTATION

(30) Priorität: 13.10.2006 DE 102006048558
(43) Veröffentlichungstag der Anmeldung: 22.07.2009
(73) Patentinhaber: Deere & Company, Moline, IL 61265-8098 (US)
(72) Erfinder: TARASINSKI, Nicolai, 67227 Frankenthal (DE); LANG, Mattias, 76698 Ubstadt-Weiher (DE); GUGEL, Rainer, 68163 Mannheim (DE); KNEER, Bernd, 68519 Viernheim (DE)
(74) Vertreter: Dehnhardt, Florian Christopher
(86) Internationale Anmeldenummer: PCT/EP2007/059987
(87) Internationale Veröffentlichungsnummer: WO 2008/043655

(56) Entgegenhaltungen:
- EP-A- 1 001 508
- DE-A1- 2 460 121
- DE-U1- 29 510 828
- DE-U1- 29 611 732

## Beschreibung

Die Erfindung betrifft eine Feststellbremse zum Feststellen mindestens eines drehbar gelagerten Bauteils gegenüber einem Gehäuse, wie z.B aus DE-U-296 11 732 bekannt.

Feststellbremsen kommen bei landwirtschaftlichen oder industriellen Nutzfahrzeugen beispielsweise in Form einer Parksperre zum Einsatz. Parksperren sind sicherheitskritische Bauteile eines Fahrzeugs. Die Parksperre dient dem Verhindern des Wegrollens des Fahrzeugs auch im ausgeschalteten und somit energielosen Zustand. Üblicherweise wird eine Parksperre federbelastet eingelegt, das heißt es ist eine Vorspannkraft vorgesehen, welche die Betätigungsmechanik stets in eine eingerückte Position der Parkbremse drängt (also insbesondere in dem energielosen Zustand des Fahrzeugs), wenn nicht ein Aktuator entgegen der Vorspannkraft die Betätigungsmechanik in eine ausgerückte Position verbringt. Bei Traktoren der Anmelderin wird ein einseitig im Getriebegehäuse gelagerter Parksperrenarm verwendet. Dieser Arm kann eine Schwenkbewegung um einige Grad durchführen und dadurch ein wellenfestes Zahnrad auf der Abtriebswelle im Getriebe blockieren. Die Schwenkbewegung ist durch eine verdrehbare Kulisse blockierbar. Die Kulisse stützt sich über einen Gehäusedeckel am Getriebegehäuse ab. Grundsätzlich kann die Parksperre rein mechanisch, das heißt über ein entsprechendes Gestänge, hydraulisch oder elektromagnetisch betätigt werden.

Elektromagnetisch betätigte form- und reibschlüssige Feststellbremsen sind als Schaltelemente in der Industrie bekannt und verbreitet. Auch Fahrzeuge mit elektromagnetischen Bremsen als Betriebs- und/oder Haltebremsen sind bekannt. Falls solche Fahrzeuge mit einem Einzelradantrieb ausgeführt. sind, wäre an jedem Rad eine eigene Feststellbremse mit jeweils einem elektromagnetisch betätigbaren Aktuator vorzusehen. Eine solche Lösung ist aufwendig und teuer, da eine doppelte Anzahl der Bauteile vorzusehen ist. Darüber hinaus erfordert eine solche Konstruktion unter Umständen Bauraum, welcher nicht vorhanden sein könnte.

Der vorliegenden Erfindung liegt daher die Aufgabe zugrunde, eine Feststellbremse der eingangs genannten Art anzugeben und weiterzubilden, durch welches die vorgenannten Probleme überwunden werden. Insbesondere soll eine vereinfachte Konstruktion zu Verfügung gestellt werden, die vorzugsweise geringeren Bauraum beansprucht.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Feststellbremse zum Feststellen mindestens eines drehbar gelagerten Bauteils gegenüber einem Gehäuse ist insbesondere zum Einsatz in einem landwirtschaftlichen oder industriellen Nutzfahrzeug geeignet. Die Feststellbremse umfasst einen Elektromagneten, zwei Ankerbauteile und zwei drehbar gelagerte Bauteile. Der Elektromagnet weist vorzugsweise einen Kern und eine Spule auf. Die Ankerbauteile sind relativbewegbar zum Elektromagneten und drehfest gegenüber dem Gehäuse angeordnet. Der Elektromagnet ist zwischen den Ankerbauteilen angeordnet. Zum Feststellen der drehbar gelagerten Bauteile mit der Feststellbremse ist jeweils ein Ankerbauteil mit jeweils einem drehbar gelagerten Bauteil in Eingriff bringbar. Die Ankerbauteile sind derart vorgespannt, dass im deaktivierten Zustand des Elektromagneten die Ankerbauteile jeweils mit den drehbar gelagerten Bauteilen in Eingriff stehen und dass im aktivierten Zustand des Elektromagneten die Ankerbauteile nicht mit den drehbar gelagerten Bauteilen in Eingriff stehen.

Erfindungsgemäß ist zunächst erkannt worden, dass die oben genannten Probleme gelöst werden können, falls lediglich eine Elektromagneten-Einheit bzw. ein Elektromagnet vorgesehen ist. Die Elektromagneten-Einheit ist zwischen den zwei Ankerbauteilen angeordnet und kann gleichsam das eine und das andere Ankerbauteil betätigen. Mit anderen Worten ist die erfindungsgemäße Feststellbremse in einem Bereich angeordnet, in welchem sie mit den zwei drehbar gelagerten Bauteilen in Eingriff gebracht werden kann, beispielsweise in einem mittigen Bereich bzw. in einem Bereich zwischen den zwei drehbar gelagerten Bauteilen. Der Elektromagnet könnte bezüglich der Längsachsen der drehbar gelagerten Bauteile zentriert oder koaxial zwischen den Ankerbauteilen angeordnet sein, so dass sich beispielsweise eine rotationssymmetrische Anordnung des Elektromagneten bezüglich mindestens einer Längsachse eines drehbar gelagerten Bauteils ergibt. Eine erfindungsgemäße Feststellbremse eignet sich ganz besonders als Parksperre für Einzelradantriebe, wobei jeweils ein Rad von jeweils einem drehbar gelagerten Bauteil angetrieben wird. Dementsprechend können die drehbar gelagerten Bauteile unabhängig voneinander rotieren.

Der Elektromagnet ist bevorzugt ortsfest an dem Gehäuse angeordnet. Hierdurch kann beispielsweise die elektrische Versorgung des Elektromagneten in einfacher Weise und ohne Schleifringe ausgeführt werden.

In einer bevorzugten Ausführungsform ist ein Ankerbauteil zumindest bereichsweise im Wesentlichen plattenförmig ausgebildet. Selbstverständlich könnte vorgesehen sein, dass die zwei Ankerbauteile zumindest bereichsweise im Wesentlichen plattenförmig ausgebildet sind und/oder spiegelverkehrt bezüglich des Elektromagneten ausgebildet und angeordnet sind. Ein Ankerbauteil könnte insbesondere in einem Bereich im Wesentlichen plattenförmig ausgebildet sein, der dem Elektromagneten zugewandt ist. Nach einem Aktivieren des Elektromagneten würde beispielsweise der Elektromagnet die Ankerbauteile anziehen und zwar solange, bis sie an dem Elektromagneten bzw. Kern anliegen beziehungsweise plan aufliegen, falls der Elektromagnet in einem den Ankerplatten zugewandten Bereich plan ausgebildet ist.

Von ganz besonderem Vorteil ist es, wenn der Elektromagnet und der plattenförmige Bereich des Ankerbauteils derart angeordnet sind, dass die Kraft des Elektromagneten im Wesentlichen senkrecht zum plattenförmigen Bereich des Ankerbauteils wirkt. Hierdurch kann eine optimale Kraftübertragung erzielt werden.

Das Ankerbauteil weist zweckmäßigerweise ein Material auf, das vom Magnetfeld des Elektromagneten angezogen wird. Beispielsweise ist das Ankerbauteil aus Metall, insbesondere Eisen oder Stahl gefertigt. Somit wird das Ankerbauteil von dem Elektromagneten angezogen, falls durch die Spule des Elektromagneten ein Strom fließt und sich hierdurch ein Magnetfeld aufbaut.

Es ist gemäß einer bevorzugten Ausführungsform mindestens ein Führungsmittel vorgesehen, mit welchem ein Ankerbauteil zwischen der eingerückten bzw. festgestellten Position und der nicht eingerückten bzw. freigegebenen Position führbar ist. Das Führungsmittel ist ortsfest an dem Gehäuse angeordnet, beispielsweise in Form von mindestens einer Stange. Das Ankerbauteil könnte in diesem Fall für jede Stange eine Ausnehmung aufweisen, welche die Stange im montierten Zustand umgreift. Das Führungsmittel könnte derart ausgebildet sein, dass mittels des mindestens einen Führungsmittels das Ankerbauteil auf einer im Wesentlichen geradlinigen Bewegung geführt wird. Dies ist beispielsweise dann der Fall, falls das Führungsmittel in Form einer Stange ausgebildet ist.

Üblicherweise wird ein drehbar gelagertes Bauteil eine Welle aufweisen, wobei diese Welle gegebenenfalls über ein Zwischengetriebe oder eine Untersetzungsstufe mit einem Einzelradantrieb des Nutzfahrzeugs drehverbunden ist. Für das drehbar gelagerte Bauteil ist üblicherweise mindestens ein Lager vorgesehen, mit welchem das Bauteil für seine Drehung in einem Gehäuse gelagert ist. Eine solche Welle wird in dem Betriebszustand, in welchem die Feststellbremse nicht eingerückt ist, von einem Motor des Fahrzeugs angetrieben, wodurch das Fahrzeug fortbewegt werden kann.

Gemäß einer bevorzugten Ausführungsform ist an einem drehbar gelagerten Bauteil eine Gegenplatte oder Gegenscheibe vorgesehen. Die Gegenplatte ist drehfest mit dem drehbar gelagerten Bauteil verbunden. Die Gegenplatte ist mit einem Ankerbauteil in Eingriff bringbar. Bei der Gegenplatte könnte es sich um eine Art Kupplungsscheibe oder um eine Scheibe mit einer Verzahnung handeln, wobei eine Reibfläche der Kupplungsscheibe mit einem Ankerbauteil in Eingriff bringbar ist, so dass zwischen der Gegenplatte und dem Ankerbauteil eine drehfeste (reib- bzw. kraftschlüssige) Verbindung hergestellt werden kann, falls die beiden Teile miteinander in Eingriff stehen. Falls die Gegenplatte in Form einer Scheibe mit einer Verzahnung ausgebildet ist, weist das Ankerbauteil ein hierzu im Wesentlichen komplementär ausgebildete Verzahnung auf. Falls die Scheibe mit der Gegenplatte im Eingriff steht, ist hierdurch eine formschlüssige drehfeste Verbindung zwischen den zwei Bauteilen hergestellt. Die Gegenplatte könnte eine Innenverzahnung aufweisen, welche zur drehfesten Verbindung mit dem drehbar gelagerten Bauteil in ein Außengewinde des drehbar gelagerten Bauteils eingreift.

Bevorzugt ist die Gegenplatte an einem freien Ende des drehbar gelagerten Bauteils angeordnet. Es könnte jedoch vorgesehen sein, dass das drehbar gelagerte Bauteil sich räumlich zumindest teilweise in den Elektromagneten erstreckt. In diesem Fall wäre die Gegenplatte in einem Bereich nahe an dem Ende des drehbar gelagerten Bauteils angeordnet, welches dem Elektromagneten zugewandt ist.

Wie bereits angedeutet, könnte das Ankerbauteil und/oder die Gegenplatte zum Herstellen einer reib- bzw. kraftschlüssigen Verbindung zwischen Ankerbauteil und Gegenplatte mindestens ein Reibelement oder eine Reibbeschichtung aufweisen. Ein solches Reibeelement wäre an der jeweils dem anderen Bauteil zugewandten Seite vorzusehen.

Alternativ oder zusätzlich hierzu könnte das Ankerbauteil und/oder die Gegenplatte zum Herstellen einer formschlüssigen Verbindung zwischen Ankerbauteil und Gegenplatte mindestens eine Verzahnung aufweisen. Eine solche Verzahnung wäre ebenfalls an der jeweils dem anderen Bauteil zugewandten Seite vorzusehen.

In einer ganz besonders bevorzugten Ausführungsform sind die Ankerbauteile mit mindestens einem Federelement vorgespannt. Ein solches Federelement könnte im einfachsten Fall eine entsprechend dimensionierte Teller- oder Spiralfeder aufweisen. Als Federelement könnte auch ein hydraulisch und/oder pneumatisch vorgespannter Zylinder vorgesehen sein, der zwischen den zwei Ankerbauteilen entsprechend angeordnet ist. Das Federelement soll jedenfalls mit einer geeigneten Kraft derart vorgespannt sein, dass im deaktivierten Betriebszustand des Elektromagneten das Ankerbauteil mit dem dazu benachbart angeordneten drehbar gelagerten Bauteil bzw. der Gegenplatte in Eingriff steht und wirksam eine form- bzw. kraftschlüssige drehfeste Verbindung zwischen den zwei Bauteilen aufrechterhalten wird. Somit kann beispielsweise eine Parkbremse für jeweils zwei einzeln angetriebene Räder realisiert werden.

In einer bevorzugten Ausführungsform ist zumindest ein Teil des Gehäuses derart ausgebildet und relativ zum Elektromagneten angeordnet, dass dieser Teil als magnetischer Rückschluss wirkt. In diesem Fall könnte sich die Spule des Elektromagneten bis zu der Gehäusewand erstrecken, so dass die außerhalb der Spule verlaufenden Magnetfeldlinien des Elektromagneten zumindest bereichsweise durch das Gehäuse verlaufen bzw. in das Gehäuse eindringen.

Bevorzugt könnte der Elektromagnet einen Topfmagneten aufweisen. Dessen zentrale Achse könnte mit einer Längsachse eines drehbar gelagerten Bauteils im Wesentlichen zusammenfallen, so dass sich nahezu ein rotationssymmetrischer Aufbau von Elektromagnet und Ankerbauteilen ergibt. Der Topfmagnet könnte in seinem äußeren Bereich ein magnetisierbares Material, beispielsweise Stahl oder Eisen, aufweisen, welches die Spule umgibt. Dieses Material bzw. dieser Gehäusebereich des Topfmagneten könnte derart ausgebildet sein, dass ein bzw. beide Ankerbauteile daran zur Anlage kommen, falls die Ankerbauteile in dem aktivierten Zustand des Elektromagneten nicht mit den drehbar gelagerten Bauteilen in Eingriff stehen. Auch in einem inneren Bereich des Topfmagneten könnte ein magnetisierbares Material vorgesehen sein, an welchem die Ankerbauteile in dem aktivierten Zustand des Elektromagneten ebenfalls zur Anlage kommen.

In einer ganz besonders bevorzugten Ausführungsform wird die erfindungsgemäße Feststellbremse bzw. der Elektromagnet mit Hilfe einer Steuervorrichtung bzw. mit einem Verfahren zum Ansteuern einer Getriebeschaltstelle gemäß einem der Ansprüche der zum Anmeldezeitpunkt dieser Patentanmeldung noch nicht veröffentlichten DE 10 2005 039 263 angesteuert. Im Folgenden wird auf die Steuervorrichtung bzw. auf das Verfahren zum Ansteuern der Getriebeschaltstelle auf die DE 10 2005 039 263 Bezug genommen. Daher wird der gesamte Offenbarungsgehalt dieser Patentanmeldung hier einbezogen.

Wenn das Ankerbauteil in einen Zustand verbracht werden soll, in welchem es gegen die Vorspannkraft zu bewegen ist und somit nicht mit dem drehbar gelagerten Bauteil in Eingriff steht, wird die Spule des Elektromagneten mit einem elektrischen Strom einer vorgebbaren ersten Stromstärke beaufschlagt. Diese erste Stromstärke ist derart bemessen, dass die vom Magnetfeld des Elektromagneten auf das Ankerbauteil wirkende Kraft derart hoch ist, dass jedenfalls die Bewegung des Ankerbauteils gegen die Vorspannkraft durchführbar ist.

Zum Halten des Ankerbauteils in dem Zustand, in welchem es gegen die Vorspannkraft zu bewegen war und wo das Ankerbauteil z.B. an dem Kern des Elektromagneten anliegt, wird die Spule des Elektromagneten mit einem elektrischen Strom einer vorgebbaren zweiten Stromstärke beaufschlagt, wobei die zweite Stromstärke kleiner als die erste Stromstärke ist. Das Ankerbauteil wird von dem Magnetfeld des Elektromagneten angezogen. Da das Ankerbauteil in diesem Zustand näher an dem Elektromagneten angeordnet ist, ist es auch ausreichend, das Ankerbauteil in dieser Stellung mit dem elektrischen Strom der zweiten Stromstärke an der Spule des Elektromagneten zu halten, da bei einem geringen Abstand des Ankerbauteils vom Elektromagneten (d.h. verkleinerter Luftspalt bzw. Luftspalt vernachlässigbarer Breite) das Magnetfeld dennoch groß genug ist (wegen einer reziproken Abhängigkeit der magnetischen Feldstärke der Ortskoordinate als Funktion des Abstands zum Elektromagneten), auch wenn der hierfür erforderliche Haltestrom lediglich ein Bruchteil - beispielsweise ein 1/5 bis ein 1/6 - des elektrischen Stroms der ersten Stromstärke ist, der zum Bewegen des Ankerbauteils eingestellt wird. Dementsprechend könnte die Spule mit einem elektrischem Strom der ersten bzw. der zweiten vorgebbaren Stromstärke im Sinn der DE 10 2005 039 263 beaufschlagt werden. Es ist auch denkbar, den Elektromagneten mit zwei getrennt ansteuerbaren Spulen auszustatten. In einem solchen Fall könnte eine Spule des Elektromagneten mit elektrischem Strom der ersten vorgebbaren Stromstärke und eine zweite Spule mit elektrischem Strom der zweiten vorgebbaren Stromstärke im Sinn der DE 10 2005 039 263 beaufschlagt werden.

Zum Verbringen des Ankerbauteils in eine von dem Elektromagneten beabstandete Position wird die Spule des Elektromagneten nicht mit elektrischen Strom beaufschlagt. Das Ankerbauteil wird also ganz einfach durch Unterbrechung des Stromflusses durch den Elektromagneten auf Grund der Vorspannkraft in die beabstandete, mit dem drehbar gelagerten Bauteil eingerückte Position verbracht. Dies ist letztendlich auch aus sicherheitstechnischen Gründen sinnvoll, denn bei einem Stromausfall befindet sich dann die erfindungsgemäße Feststellbremse automatisch in dem verriegelten Zustand bzw. in ihrer eingerückten Position.

Obwohl der gesamte Offenbarungsgehalt der DE 10 2005 039 263 hier mit einbezogen wird, sei ganz besonders darauf hingewiesen, dass der Strom, mit dem der Elektromagnet beaufschlagt wird, gepulst sein kann und insbesondere pulsweitenmoduliert ist. Hierdurch ist in ganz besonders vorteilhafter Weise der Energiebedarf zum Halten des Ankerbauteils in der Stellung, in welcher die Vorspannkraft zu überwinden ist, sehr gering.

Zum Detektieren der Drehzahl des drehbar gelagerten Bauteils könnte die diesem drehbar gelagerten Bauteil zugeordnete Gegenplatte eine Verzahnung aufweisen. Die Drehzahl könnte beispielsweise mittels eines Hall-Sensors detektiert werden, falls die Verzahnung magnetisiert ausgebildet ist.

In einer ganz besonders bevorzugten Ausführungsform sind die einzeln angetriebenen Räder einer Achse des Fahrzeugs mit einer Feststellbremse nach einem der Ansprüche 1 bis 14 feststellbar. Insoweit kann hierdurch ein Einzelradantrieb eines Fahrzeugs realisiert werden, bei welchem die einzeln angetriebenen Räder mit lediglich einer Baugruppe (nämlich der erfindungsgemäßen Feststellbremse) festgestellt werden können. Ganz besonders bevorzugt handelt es sich bei dem Fahrzeug um ein landwirtschaftliches oder industrielles Nutzfahrzeug und insbesondere um einen Traktor.

Somit kann ein landwirtschaftliches oder industrielles Nutzfahrzeug, insbesondere ein Traktor, zur Verfügung gestellt werden, welcher mindestens einen Einzelradantrieb für zwei einzeln angetriebene Räder aufweist, wobei die angetriebenen Räder einer Achse des Fahrzeugs mit einer Feststellbremse nach einem der Ansprüche 1 bis 14 feststellbar sind. Zur Vermeidung von Wiederholungen wird hinsichtlich der konstruktiven Ausgestaltung der Feststellbremse auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: in einer Schnittansicht ein erstes Ausführungsbeispiel einer erfindungsgemäßen Feststellbremse,
- Fig. 2: in einer Schnittansicht ein zweites Ausführungsbeispiel einer erfindungsgemäßen Feststellbremse und
- Fig. 3: in einer Schnittansicht ein drittes Ausführungsbeispiel einer erfindungsgemäßen Feststellbremse.

Gleiche oder ähnliche Bauteile sind in den Figuren mit denselben Bezugszeichen gekennzeichnet.

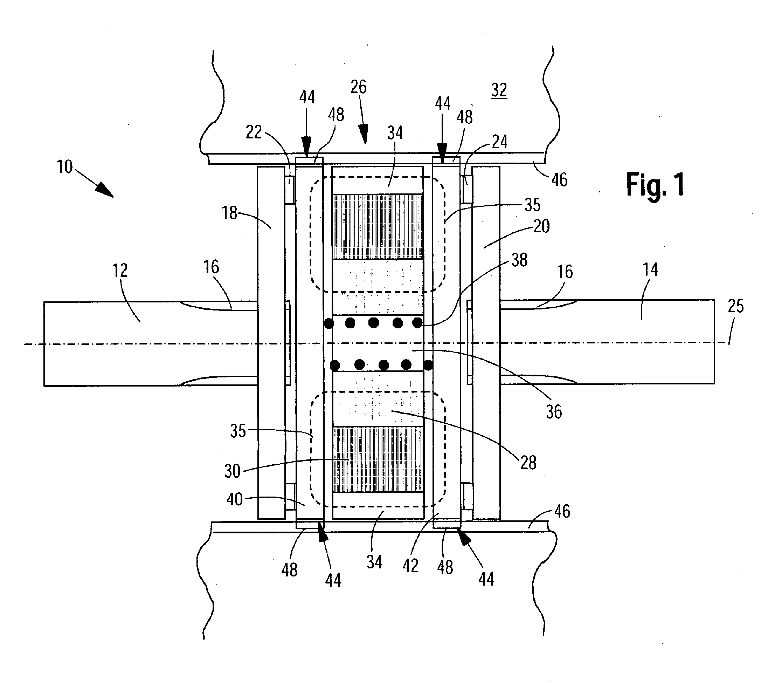

Figur 1 zeigt eine erfindungsgemäße Feststellbremse 10, mit welcher zwei drehbar gelagerte Bauteile 12, 14 feststellbar sind. Mit den drehbar gelagerten Bauteilen 12, 14 sind in den Figuren nicht eingezeichnete Räder jeweils drehverbunden, wobei mit dem links eingezeichneten drehbar gelagerten Bauteil 12 das linke Rad einer Fahrzeugachse und mit dem rechts eingezeichneten drehbar gelagerten Bauteil 14 das rechte Rad einer Fahrzeugachse antreibbar ist. Das linke und das rechte Rad werden unabhängig voneinander angetrieben. Mit anderen Worten handelt es sich um einen Einzelradantrieb. Sowohl das linke als auch das rechte drehbar gelagerte Bauteil 12, 14 weist eine Außenverzahnung 16 auf, mit welcher das drehbar gelagerte Bauteil 12, 14 jeweils mit einer Gegenplatte 18, 20 drehfest verbunden werden kann. Dementsprechend weisen die Gegenplatten 18, 20 jeweils eine Innenverzahnung auf, welche zur Außenverzahnung 16 komplementär ausgebildet ist. Die Gegenplatten 18, 20 sind also an den freien Enden der drehbar gelagerten Bauteile 12, 14 vorgesehen. In einem äußeren Bereich der Gegenplatten 18, 20 ist jeweils eine Verzahnung 22, 24 vorgesehen, welche umfangsmäßig auf der der anderen Gegenplatte zugewandten Seite vorgesehen ist und welche in axialer Richtung ausgebildet ist. Die Bauteile 12, 14 sind in Lagern drehbar um die Achse 25 gelagert, wobei die Lager in den Figuren nicht eingezeichnet sind.

Es ist ein Elektromagnet 26 vorgesehen, der einen Kern 28 und eine Spule 30 aufweist. Der Elektromagnet 26 ist drehfest in dem Gehäuse 32 angeordnet, in welchem die Feststellbremse 10 angeordnet ist. Bei dem Elektromagneten gemäß Figur 1 handelt es sich um einen Topfmagneten, wobei die Spule 30 mit ihrer Wicklung um den Kern 28 gewickelt ist. Der Kern ist aus einem magnetisierbaren Material ausgebildet, nämlich im Konkreten aus Eisen oder Stahl. In einem äußeren Bereich 34 des Elektromagneten 26 ist ebenfalls ein magnetisierbares Material vorgesehen. Insoweit verlaufen die Magnetfeldlinien sowohl durch den Kern 28 als auch durch den magnetischen Rückschluss 34 des Elektromagneten 26. Insgesamt bildet sich ein Magnetfeld aus, dessen Feldlinien torusförmig sich um die Spule 30 ausbilden bzw. verlaufen. In Figur 1 sind Feldlinien 35 gestrichelt gezeichnet angedeutet, welches sich bei einem aktivierten Elektromagneten 26 ergeben würden.

Der Kern 28 weist eine Bohrung 36 auf, in welcher eine Feder 38 angeordnet ist. Die Feder 38 ist vorgespannt und drängt die Ankerbauteile 40, 42 jeweils in Richtung der Gegenplatten 18, 20. Mit anderen Worten drückt die Feder 38 die Ankerbauteile 40, 42 vom Elektromagneten 26 weg. Der Elektromagnet 26 ist zwischen den Ankerbauteilen 40, 42 angeordnet. Die Ankerbauteile 40, 42 sind im Wesentlichen plattenförmig ausgebildet und bestehen aus magnetisierbaren Material und werden dementsprechend von dem Elektromagneten 26 angezogen, falls dieser aktiviert ist und ein Magnetfeld aufbaut.

Die Ankerbauteile 40 ,42 sind in Richtung der Achse 25 relativ zu dem Elektromagneten 26 und dem Gehäuse 32 beweglich angeordnet. So können die Ankerbauteile 40, 42 in einer möglichen Betriebsstellung jeweils mit den Gegenplatten 18, 20 in Eingriff gebracht werden, so dass letztendlich das jeweils drehbar gelagerte Bauteil 12, 14 über die jeweilige Gegenplatte 18, 20 gegenüber dem Gehäuse 32 festgestellt werden kann. In einem solchen Betriebszustand, der in Figur 1 gezeigt ist, ist die Feststellbremse eingerückt und die drehbar gelagerten Bauteile 12, 14 sind festgestellt. In diesen Betriebszustand werden die Ankerbauteile 40, 42 mit ihrer Verzahnung 22, 24 in die entsprechenden Verzahnungen der Gegenplatte 18, 20 durch die vorgespannte Feder 38 gedrängt.

Falls der Elektromagnet 26 aktiviert ist werden die Ankerbauteile 40, 42 von dem Elektromagneten angezogen, so dass die Verzahnungen 22, 24 nicht ineinander greifen und die Gegenplatten 18, 20 und die damit jeweils verbundenen drehbar gelagerten Bauteile 12, 14 freigegeben werden, so dass in diesem Betriebszustand der Feststellbremse 10 die drehbar gelagerten Bauteile 12, 14 nicht festgestellt sind. Zwischen diesen zwei Betriebszuständen führen die Ankerbauteile 40, 42 jeweils eine im Wesentlichen geradlinige Bewegung aus, welche durch entsprechend vorgesehenen Führungsmittel 44 geführt wird. Das Führungsmittel 44 weist eine an dem Gehäuse 32 vorgesehene Verzahnung 46 oder ein entsprechend ausgebildeter Vorsprung und eine im Wesentlichen komplementär hierzu ausgebildete Verzahnung 48 der Ankerbauteile 40, 42 auf. Insoweit ist ein Ankerbauteil 40, 42 im Gehäuse 32 drehfest angeordnet und bezüglich einer linearen Bewegung entlang der Achse 25 innerhalb des Gehäuses 32 durch das Führungsmittel 44 geführt.

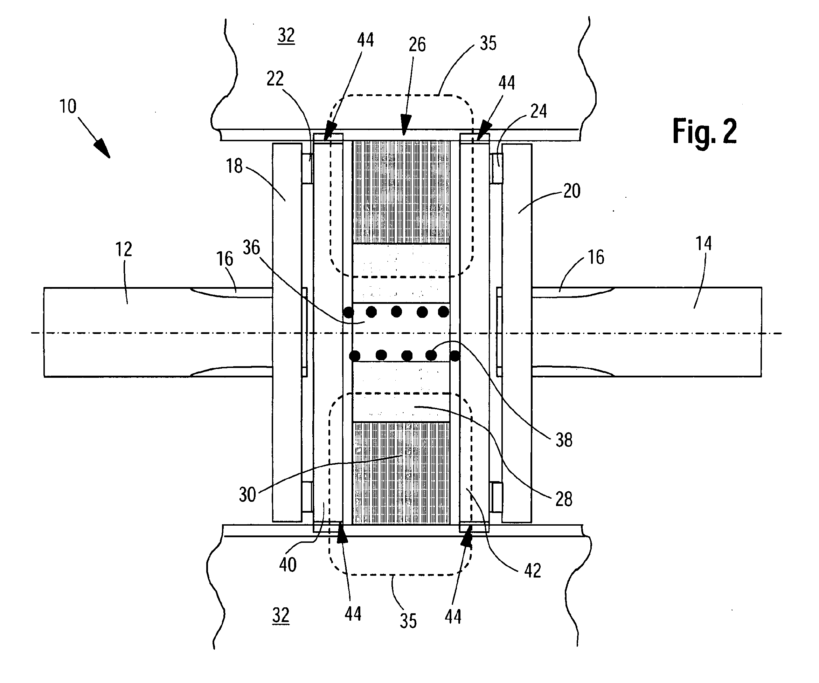

Figur 2 zeigt in einer schematischen Darstellung ein weiteres Ausführungsbeispiel einer erfindungsgemäßen Feststellbremse 10, welches ähnlich zu dem Ausführungsbeispiel gemäß Figur 1 ausgebildet ist. Der Elektromagnet 26 weist ebenfalls einen Kern 28 und eine Spule 30 auf. Der Elektromagnet 26 umfasst in dem Ausführungsbeispiel gemäß Figur 2 allerdings kein dem magnetischen Rückschluss 34 aus Figur 1 entsprechendes Bauteil. Dementsprechend kommen die Ankerbauteile 40, 42 lediglich an dem Kern 28 des Elektromagneten 26 zur Anlage, wobei die radialen äußeren Bereichen der Ankerbauteile 40, 42 auch an der Spule 30 zur Anlage kommen können. Somit bilden sich bei einem aktivierten Elektromagneten 26 ebenfalls torusförmige Feldlinien 35 aus, die im äußeren Bereich des Elektromagneten 26 durch das Gehäuse 32 sich erstrecken. Bei dem Ausführungsbeispiel gemäß Figur 1 kommt im aktivierten Zustand des Elektromagneten ein Ankerbauteil 40, 42 demgemäß an dem Kern 28 und an dem magnetischen Rückschluss 34 zur Anlage.

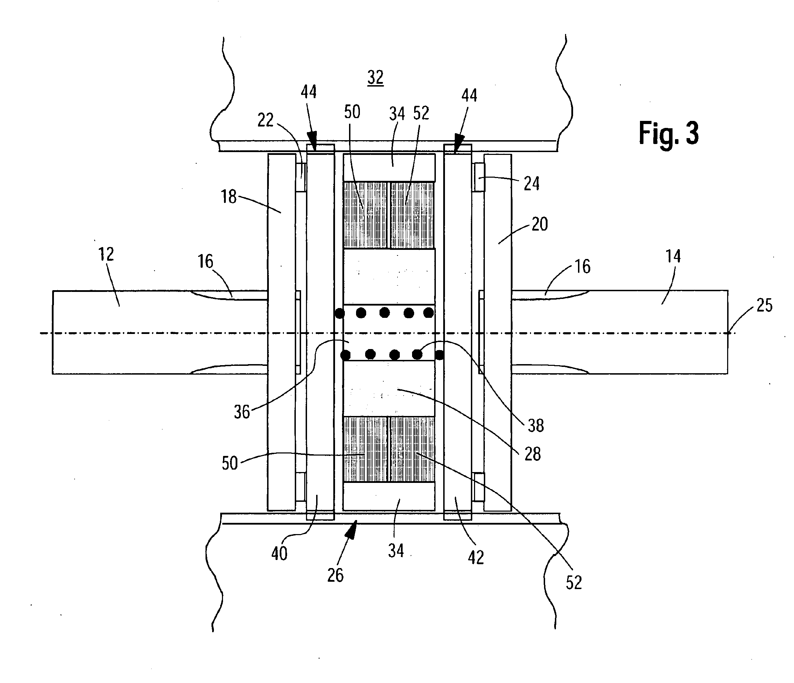

Figur 3 zeigt in einer schematischen Darstellung ein drittes Ausführungsbeispiel einer erfindungsgemäßen Feststellbremse. Auch dieses Ausführungsbeispiel ist im Wesentlichen vergleichbar zu den Ausführungsbeispielen der Figur 1 und 2 vergleichbar ausgebildet. Der Elektromagnet 26 gemäß Figur 3 weist zwei Spulen 50, 52 auf, welche um dem Kern 28 des Elektromagneten 26 gewickelt sind. Die Spulen 50, 52 sind getrennt voneinander mit Strom beaufschlagbar. Sie können derart ausgebildet und angesteuert werden, dass hiermit eine Redundanz bei aktiviertem Elektromagneten 26 und somit bei gelöster Feststellbremse vorliegt. Falls nämlich beispielsweise der die Spule 50 bzw. der die Spule 52 mit Strom versorgende Stromkreis (in den Figuren nicht gezeigt) ausfallen sollte, ist das Magnetfeld des Elektromagneten 26, welches in diesem Fall dann lediglich mit Hilfe der Spule 50 aufgebaut wird, immer noch stark genug, um die Ankerbauteile 40, 42 an dem Elektromagneten 26 zur Anlage zu bringen, damit die Feststellbremse 10 gelöst ist. Es sind auch andere Ansteuerstrategien denkbar, nämlich beispielsweise dass die Ankerbauteile 40, 42 nur dann an dem Elektromagneten 26 zur Anlage gebracht werden können, falls beide Spulen gleichzeitig mit Strom beaufschlagt werden.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Feststellbremse zum Feststellen von zwei, unabhängig voneinander antreibbaren, drehbar gelagerten Bauteilen (12, 14) gegenüber einem Gehäuse (32), insbesondere zum Einsatz in einem landwirtschaftlichen oder industriellen Nutzfahrzeug, mit einem Elektromagneten (26), zwei Ankerbauteilen (40, 42), wobei der Elektromagnet (26) vorzugsweise einen Kern (28) und eine Spule (30; 50, 52) aufweist, wobei die Ankerbauteile (40, 42) relativbewegbar zum Elektromagneten (26) und drehfest gegenüber dem Gehäuse (32) angeordnet sind, wobei der Elektromagnet (26) zwischen den Ankerbauteilen (40, 42) angeordnet ist, wobei zum Feststellen der drehbar gelagerten Bauteile (12, 14) mit der Feststellbremse (10) jeweils ein Ankerbauteil (40, 42) mit jeweils einem drehbar gelagerten Bauteil (12, 14) in Eingriff bringbar ist, wobei die Ankerbauteile (40, 42) derart vorgespannt sind, dass im deaktivierten Zustand des Elektromagneten (26) die Ankerbauteile (40, 42) jeweils mit den drehbar gelagerten Bauteilen (12, 14) in Eingriff stehen und dass im aktivierten Zustand des Elektromagneten (26) die Ankerbauteile (40, 42) nicht mit den drehbar gelagerten Bauteilen (12, 14) in Eingriff stehen.

2. Feststellbremse nach Anspruch 1, **dadurch gekennzeichnet, dass** der Elektromagnet (26) ortsfest am Gehäuse (32) angeordnet ist.

3. Feststellbremse nach Anspruch 1 oder 2, **dadurch gekennzeichnet, dass** ein Ankerbauteil (40, 42) zumindest bereichsweise im Wesentlichen plattenförmig ausgebildet ist, insbesondere in einem Bereich, der dem Elektromagneten (26) zugewandt ist, wobei vorzugsweise der Elektromagnet (26) und der plattenförmige Bereich des Ankerbauteils (40, 42) derart angeordnet sind, dass die Kraft des Elektromagneten (26) im Wesentlichen senkrecht zum plattenförmigen Bereich des Ankerbauteils (40, 42) wirkt.

4. Feststellbremse nach einem der Ansprüche 1 bis 3, **dadurch gekennzeichnet, dass** das Ankerbauteil (40, 42) ein Material aufweist, das vom Magnetfeld des Elektromagneten (26) angezogen wird.

5. Feststellbremse nach einem der Ansprüche 1 bis 4, **dadurch gekennzeichnet, dass** mindestens ein Führungsmittel (44) vorgesehen ist, mit welchem ein Ankerbauteil (40, 42) zwischen der eingerückten Position und der nicht eingerückten Position führbar ist, wobei mittels des mindestens einen Führungsmittels (44) das Ankerbauteil (40, 42) auf einer im Wesentlichen geradlinigen Bewegung geführt ist.

6. Feststellbremse nach einem der Ansprüche 1 bis 5, **dadurch gekennzeichnet, dass** ein drehbar gelagertes Bauteil (12, 14) eine Welle aufweist, welche vorzugsweise mit einem Einzelradantrieb des Nutzfahrzeugs drehverbunden ist.

7. Feststellbremse nach einem der Ansprüche 1 bis 6, **dadurch gekennzeichnet, dass** an einem drehbar gelagerten Bauteil (12, 14) eine Gegenplatte (18, 20) vorgesehen ist, welche drehfest mit dem drehbar gelagerten Bauteil (12, 14) verbunden ist und welche mit einem Ankerbauteil (40, 42) in Eingriff bringbar ist, wobei die Gegenplatte (18, 20) bevorzugt an einem freien Ende des drehbar gelagerten Bauteils (12, 14) angeordnet ist.

8. Feststellbremse nach einem der Ansprüche 1 bis 7, **dadurch gekennzeichnet, dass** das Ankerbauteil (40 ,42) und/oder die Gegenplatte (18, 20) zum Herstellen einer reib- bzw. kraftschlüssigen Verbindung zwischen Ankerbauteil (40, 42) und Gegenplatte (18, 20) mindestens ein Reibelement aufweist.

9. Feststellbremse nach einem der Ansprüche 1 bis 8, **dadurch gekennzeichnet, dass** das Ankerbauteil (40, 42) und/oder die Gegenplatte (18) zum Herstellen einer formschlüssigen Verbindung zwischen Ankerbauteil (40, 42) und Gegenplatte (18, 20) mindestens eine Verzahnung (22, 24) aufweist.

10. Feststellbremse nach einem der Ansprüche 1 bis 9, **dadurch gekennzeichnet, dass** die Ankerbauteile (40, 42) mit mindestens einem Federelement (38) vorgespannt sind.

11. Feststellbremse nach einem der Ansprüche 1 bis 10, **dadurch gekennzeichnet, dass** zumindest ein Teil des Gehäuses (32) derart ausgebildet ist und relativ zum Elektromagneten (26) angeordnet ist, dass dieser Teil als magnetischer Rückschluss wirkt.

12. Feststellbremse nach einem der Ansprüche 1 bis 11, **dadurch gekennzeichnet, dass** der Elektromagnet (26) einen Topfmagneten aufweist.

13. Feststellbremse nach einem der Ansprüche 1 bis 12, **dadurch gekennzeichnet, dass** eine Gegenplatte (18, 20) eine Verzahnung aufweist, mit welcher die Drehbewegung der Gegenplatte (18, 20) und somit des drehbar gelagerten Bauteils (12, 14) detektierbar ist, vorzugsweise mittels eines Hall-Sensors.

14. Einzelradantrieb eines landwirtschaftlichen oder industriellen Nutzfahrzeugs, insbesondere eines Traktors, wobei die angetriebenen Räder einer Achse des Fahrzeugs mit einer Feststellbremse (10) nach einem der Ansprüche 1 bis 13 feststellbar sind.

15. Landwirtschaftliches oder industrielles Nutzfahrzeug, insbesondere ein Traktor, welches mindestens einen Einzelradantrieb für zwei einzeln angetriebene Räder aufweist, wobei die angetriebenen Räder einer Achse des Fahrzeugs mit einer Feststellbremse (10) nach einem der Ansprüche 1 bis 13 feststellbar sind.

## Claims

1. Arresting brake for arresting with respect to a housing (32), two components (12,14) which can be mounted rotatably and driven independently of one another, in particular for use in an agricultural or industrial utility vehicle, having an electromagnet (26), and two armature components (40, 42), wherein the electromagnet (26) preferably has a core (28) and a coil (30; 50, 52), wherein the armature components (40, 42) are arranged such that they can move in relation to the electromagnet (26) and are rotationally fixed with respect to the housing (32), wherein the electromagnet (26) is arranged between the armature components (40, 42), wherein, in order to arrest the rotatably mounted components (12, 14) using the arresting brake (10), in each case an armature component (40, 42) can be engaged with, in each case, one rotatably mounted component (12, 14), wherein the armature components (40, 42) are prestressed in such a way that in the deactivated state of the electromagnet (26) the armature components (40, 42) can each be in engagement with the rotatably mounted components (12, 14), and in that in the activated state of the electromagnet (26) the armature components (40, 42) cannot be in engagement with the rotatably mounted components (12, 14).

2. Arresting brake according to Claim 1, **characterized in that** the electromagnet (26) is arranged in a positionally fixed fashion on the housing (32).

3. Arresting brake according to Claim 1 or 2, **characterized in that** an armature component (40, 42) is formed essentially in a plate shape at least in certain areas, in particular in an area which faces the electromagnet (26), wherein the electromagnet (26) and the plate-shaped area of the armature component (40, 42) are preferably arranged in such a way that the force of the electromagnet (26) acts essentially perpendicularly with respect to the plate-shaped area of the armature component (40, 42).

4. Arresting brake according to one of Claims 1 to 3, **characterized in that** the armature component (40, 42) has material which is attracted by the magnetic field of the electromagnet (26).

5. Arresting brake according to one of Claims 1 to 4, **characterized in that** at least one guide means (44) is provided, with which guide means (44) an armature component (40, 42) can be guided between the engaged position the nonengaged position, and wherein the armature component (40, 42) is guided on an essentially linear movement by means of the at least one guide means (44).

6. Arresting brake according to one of Claims 1 to 5, **characterized in that** a rotatably mounted component (12, 14) has a shaft which is preferably rotatably connected to an individual wheel drive of the utility vehicle.

7. Arresting brake according to one of Claims 1 to 6, **characterized in that** a corresponding plate (18, 20), which is connected in a rotationally fixed fashion to the rotatably mounted component (12, 14) and which can be engaged with an armature component (40, 42), is provided on a rotatably mounted component (12, 14), wherein the corresponding plate (18, 20) is preferably arranged at a free end of the rotatably mounted component (12, 14).

8. Arresting brake according to one of Claims 1 to 7, **characterized in that** the armature component (40, 42) and/or the corresponding plate (18, 20) has at least one friction element for producing a frictionally locking or non-positively locking connection between the armature component (40, 42) and corresponding plate (18, 20).

9. Arresting brake according to one of Claims 1 to 8, **characterized in that** the armature component (40, 42) and/or the corresponding plate (18) has at least one tooth system (22, 24) for producing a positively locking connection between the armature component (40, 42) and corresponding plate (18, 20).

10. Arresting brake according to one of Claims 1 to 9, **characterized in that** the armature components (40, 42) are prestressed using at least one spring element (38).

11. Arresting brake according to one of Claims 1 to 10, **characterized in that** at least part of the housing (32) is embodied and arranged relative to the electromagnet (26) in such a way that this part acts as a magnetic return.

12. Arresting brake according to one of Claims 1 to 11, **characterized in that** the electromagnet (26) has a pot magnet.

13. Arresting brake according to one of Claims 1 to 12, **characterized in that** a corresponding plate (18, 20) has a tooth system with which the rotational movement of the corresponding plate (18, 20), and therefore of the rotatably mounted component (12, 14), can be detected, preferably by means of a Hall sensor.

14. Individual wheel drive of an agricultural or industrial utility vehicle, in particular of a tractor, **characterized in that** the driven wheels of an axle of the vehicle can be arrested using an arresting brake (10) according to one of Claims 1 to 13.

15. Agricultural or industrial utility vehicle, in particular a tractor, which has at least one individual wheel drive for two individually driven wheels, **characterized in that** the driven wheels of an axle of the vehicle can be arrested using an arresting brake (10) according to one of Claims 1 to 13.

## Revendications

1. Frein de stationnement pour bloquer deux composants (12, 14) pouvant être entraînés indépendamment l'un de l'autre et montés de manière rotative, par rapport à un boîtier (32), notamment pour l'utilisation dans un véhicule utilitaire agricole ou industriel, avec un électroaimant (26) et deux composants d'induit (40, 42), l'électroaimant (26) présentant de préférence un noyau (28) et une bobine (30 ; 50, 52), les composants d'induit (40, 42) étant disposés de manière déplaçable relativement par rapport à l'électroaimant (26) et de manière solidaire en rotation par rapport au boîtier (32), l'électroaimant (26) étant disposé entre les composants d'induit (40, 42), un composant d'induit (40, 42) pouvant être amené en prise avec un composant respectif (12, 14) monté à rotation pour bloquer les composants (12, 14) montés à rotation avec le frein de stationnement (10), les composants d'induit (40, 42) étant précontraints de telle sorte que dans l'état désactivé de l'électroaimant (26), les composants d'induit (12, 14) soient à chaque fois en prise avec les composants (12, 14) montés à rotation et que dans l'état activé de l'électroaimant (26), les composants d'induit (40, 42) ne soient pas en prise avec les composants (12, 14) montés à rotation.

2. Frein de stationnement selon la revendication 1, **caractérisé en ce que** l'électroaimant (26) est disposé de manière fixe sur le boîtier (32).

3. Frein de stationnement selon la revendication 1 ou 2, **caractérisé en ce qu'**un composant d'induit (40, 42) est réalisé au moins en partie essentiellement en forme de plaque, notamment dans une région qui est tournée vers l'électroaimant (26), l'électroaimant (26) et la région en forme de plaque du composant d'induit (40, 42) étant de préférence disposés de telle sorte que la force de l'électroaimant (26) agisse essentiellement perpendiculairement par rapport à la région en forme de plaque du composant d'induit (40, 42).

4. Frein de stationnement selon l'une quelconque des revendications 1 à 3, **caractérisé en ce que** le composant d'induit (40, 42) présente un matériau qui est attiré par le champ magnétique de l'électroaimant (26).

5. Frein de stationnement selon l'une quelconque des revendications 1 à 4, **caractérisé en ce qu'**au moins un moyen de guidage (44) est prévu, avec lequel un composant d'induit (40, 42) peut être guidé entre la position embrayée et la position non embrayée, le composant d'induit (40, 42) étant guidé dans un déplacement essentiellement rectiligne au moyen de l'au moins un moyen de guidage (44).

6. Frein de stationnement selon l'une quelconque des revendications 1 à 5, **caractérisé en ce qu'**un composant (12, 14) monté à rotation présente un arbre, qui est de préférence connecté en rotation à un entraînement de roue individuel du véhicule utilitaire.

7. Frein de stationnement selon l'une quelconque des revendications 1 à 6, **caractérisé en ce qu'**une plaque conjuguée (18, 20) est prévue sur un composant (12, 14) monté à rotation, laquelle est connectée de manière solidaire en rotation au composant monté à rotation (12, 14), et peut être amenée en prise avec un composant d'induit (40, 42), la plaque conjuguée (18, 20) étant de préférence disposée sur une extrémité libre du composant (12, 14) monté à rotation.

8. Frein de stationnement selon l'une quelconque des revendications 1 à 7, **caractérisé en ce que** le composant d'induit (40, 42) et/ou la plaque conjuguée (18, 20) présente au moins un élément de friction pour créer une connexion par engagement par friction et/ou par force entre le composant d'induit (40, 42) et la plaque conjuguée (18, 20).

9. Frein de stationnement selon l'une quelconque des revendications 1 à 8, **caractérisé en ce que** le composant d'induit (40, 42) et/ou la plaque conjuguée (18) présente au moins une denture (22, 24) pour créer une connexion par engagement par correspondance géométrique entre le composant d'induit (40, 42) et la plaque conjuguée (18, 20).

10. Frein de stationnement selon l'une quelconque des revendications 1 à 9, **caractérisé en ce que** les composants d'induit (40, 42) sont précontraints avec au moins un élément de ressort (38).

11. Frein de stationnement selon l'une quelconque des revendications 1 à 10, **caractérisé en ce qu'**au moins une partie du boîtier (32) est réalisée de telle sorte et est disposée par rapport à l'électroaimant (26) de telle sorte que cette pièce agisse comme une culasse magnétique.

12. Frein de stationnement selon l'une quelconque des revendications 1 à 11, **caractérisé en ce que** l'électroaimant (26) présente un aimant en forme de pot.

13. Frein de stationnement selon l'une quelconque des revendications 1 à 12, **caractérisé en ce qu'**une plaque conjuguée (18, 20) présente une denture avec laquelle le mouvement de rotation de la plaque conjuguée (18, 20) et donc du composant (12, 14) monté à rotation peut être détecté, de préférence au moyen d'un capteur de Hall.

14. Entraînement de roue individuelle d'un véhicule utilitaire agricole ou industriel, notamment d'un tracteur, dans lequel les roues entraînées d'un essieu du véhicule peuvent être bloquées au moyen d'un frein de stationnement (10) selon l'une quelconque des revendications 1 à 13.

15. Véhicule utilitaire agricole ou industriel, notamment tracteur, qui présente au moins un entraînement de roue individuelle pour deux roues entraînées individuellement, les roues entraînées d'un essieu du véhicule pouvant être bloquées au moyen d'un frein de stationnement (10) selon l'une quelconque des revendications 1 à 13.
